# EUROPEAN PATENT SPECIFICATION

(11) **EP 2 481 962 B1**
(45) Date of publication and mention of the grant of the patent: **17.12.2014**
(21) Application number: 11000637.6
(22) Date of filing: 27.01.2011
(51) Int. Cl.: G05D 16/06, F16K 1/42

(54) **Valve arrangement for controlling a heating or cooling fluid and tool arrangement for replacing at least a part of such a valve arrangement**
Ventilanordnung zur Regelung des Durchflusses einer Heiz- oder Kühlflüssigkeit und Werkzeuganordnung zum Auswechseln von mindestens einem Teil einer derartigen Ventilanordnung
Agencement de soupape pour contrôler un fluide de chauffage ou de refroidissement et agencement d'outils pour remplacer au moins une pièce d'un tel agencement de soupape

(43) Date of publication of application: 01.08.2012
(73) Proprietor: Danfoss A/S, 6430 Nordborg (DK)
(72) Inventor: Christensen, Morten Hedegaard, 8963 Auning (DK); Bjerggaard, Niels, 8370 Hadsten (DK); Hölck, Poul, 8300 Odder (DK); Krogh, Tina Vassard, 8960 Randers (DK); Rasmussen, Bent Karsten, 8600 Silkeborg (DK)
(74) Representative: Knoblauch, Andreas

(56) References cited:
- WO-A1-96/09485
- WO-A1-2006/031161
- DE-A1-102005 031 717
- DE-B3- 10 256 035
- GB-A- 884 227
- US-A- 4 778 347

## Description

The present invention relates to a valve arrangement according to the preamble of claim 1.

Such a valve arrangement is usually used to control the flow of a heating fluid through a radiator or a floor heating system or for controlling a cooling fluid through another heat exchanger which is used for cooling a room in a building. The flow of the heating or cooling fluid is controlled by adjusting a distance between a valve element and a valve seat. This distance can be adjusted by moving the valve element relative to the valve seat.

In some case the operation of such a valve arrangement causes a noise which reduces the comfort of a person in the room which is to be heated or cooled. In such cases it is very difficult to reduce such a noise to a level which is acceptable by the person.

Known valve arrangements are disclosed in WO 2006/031161 A1, GB 884 227 A, DE 10 2005 031717 A1, WO 96/09485 A1. A tool arrangement for replacing at least a part of a valve arrangement is known from US 4,778,347 A1.

The task underlying the invention is to enhance the comfort of a user in a room to be heated or cooled.

This task is solved with a valve arrangement of the kind mentioned above with the features of the characterising part of claim 1.

If the valve arrangement causes a problem, for example generates a noise during operation, it is possible to replace the valve seat. In many cases such a replacement of the valve seat changes the noise generation and, if a suitable valve seat is used as replacement valve seat, the generation of noise can be avoided or dramatically reduced. Furthermore, the replacement of the valve seat is advantageous in a case in which the valve does not work properly. In some cases a calcination of the valve seat occurs or other dirt or debris accumulates at the valve seat. The cleaning of the valve seat has the risk of damaging the valve seat. When the valve seat is mounted detachably in the valve housing it is rather simple to replace the old valve seat with a new one. Also the valve element is supported in an upper part of the valve.

Furthermore the valve seat is connected to a tool fixing geometry allowing a valve seat tool to be fastened. The tool fixing geometry can be arranged directly at the valve seat or it can be positioned at a part which can be moved out of the valve housing together with the valve seat. The tool fixing geometry allows the valve seat tool, which is a demounting and mounting tool, to be fastened. Therefore, in order to remove the valve seat from the housing it is only necessary to connect the valve seat tool to the tool fixing geometry and to pull out the valve seat out of the housing. Even if the valve seat is held in the valve housing by friction, calcination or other adverse effects it is possible to pull out the valve seat with the necessary forces.

Furthermore the upper part is provided with a tool engaging geometry and the tool engaging geometry and the tool fixing geometry having a common axis. The embodiment has the advantage that a common tool arrangement can be used for demounting the upper part of the valve as well as the valve seat. Since in the present case the upper part of the valve has to be removed before the valve seat can be removed this arrangement facilitates the demounting of the valve seat. For example: for the demounting of the upper part and the demounting of the valve seat a rotation of a demounting tool around the same axis is sufficient for the demounting.

Preferably the valve seat is fixed in the housing by means of said upper part. The upper part can be removed from the valve housing so that there is free access to the valve seat. When the upper part of the valve is removed from the valve housing there are no further means holding the valve seat in the valve housing so that the valve seat can easily be removed.

Preferably a plurality of different valve seats is provided and a valve seat mounted in said housing is replaceable by another valve seat of said plurality of valve seats. The installer or a maintenance person is provided with a stock or supply of valve seats so that he is able to replace one valve seat with another one.

Preferably at least two valve seats of said plurality of valve seats differ in a curvature of an edge surrounding a through-opening through said valve seat. This through-opening forms a part of the flow path through the valve arrangement. The curvature of the edge is one reason for the generation of noise. However, it is difficult to predict which curvature would generate noise in a certain system. However, when different curvatures are available, the installer can easily chose another curvature of the edge than the installed one in order to avoid the generation of noise or other adverse effects.

In a preferred embodiment at least two valve seats of said plurality of valve seats differ in material. Another possibility for changing the characteristics of the valve arrangement is to use a valve seat having a different material.

In a preferred embodiment a pressure regulating valve is mounted detachably in the housing upstream the valve seat and the tool fixing geometry is part of the pressure regulating valve. In this case the valve seat tool is fastened to the pressure regulating valve. When the pressure regulating valve is moved out of the housing, the valve seat is removed as well.

In a preferred embodiment the valve seat is part of the pressure regulating valve. The valve seat and the pressure regulating valve form a unit. The valve seat is arranged at a front face of the pressure regulating valve facing the valve element.

In another preferred embodiment the valve seat is arranged on a seat element separated from the regulating valve housing.

For solving the above-mentioned task a tool arrangement is provided for replacing at least a part of the valve arrangement described above, said tool arrangement having a tool housing, said tool housing having a connection part for mounting said tool housing to said valve housing, a tool guiding part and a stop valve part arranged between said connection part and said tool guiding part, said tool guiding part guiding an actuating means, said actuating means carrying an valve seat tool, wherein said valve seat tool is adapted to said tool fixing geometry.

Such a tool arrangement can be used for a simple removal of the valve seat. The connection part is connected to the valve housing, the stop valve part being closed so that no heating or cooling liquid can escape when the upper part of the valve is removed. When the upper part is removed, the valve seat tool can be fixed to the tool fixing geometry. The valve seat can be moved out of the valve housing by pulling the actuating means. When the valve seat has been pulled out of the housing and out of the stop valve part of the tool housing, the stop valve part is closed so that the valve seat can be removed from the tool arrangement. To this end the tool housing has to be opened. When the tool housing is opened, the valve seat on the valve seat tool can be replaced by another valve seat and inserted back again in the tool housing. When the tool housing is closed in a fluid tight manner, the stop valve part of the tool housing is opened and the valve seat can be inserted into the valve housing by means of the actuating means which is pushed toward the valve housing.

Preferably an upper part tool is mounted to said actuating means, said upper part tool is adapted to said tool engaging geometry. The upper part tool can be used to remove the upper part of the valve from the valve housing. To this end the upper part tool is connected to the tool engaging geometry. For example, the upper part can be screwed out of the housing by rotating the actuating means and pulling it away from the valve housing when the upper part has been disconnected from the valve housing. The upper part tool can be mounted detachably to said actuating means. In this case it is possible to replace the upper part tool with the valve seat tool. The upper part tool is a demounting and mounting tool as well.

However, in a preferred embodiment said valve seat tool is mounted to said upper part tool. In this case the upper part tool can remain at the actuating means and the valve seat tool is mounted additionally to the actuating means, when it is necessary. This has the advantage of saving work during replacement. It is not necessary to remove the upper part tool from the actuating means.

Preferably said upper part tool forms a hollow cylinder and the valve seat tool is insertable into said hollow cylinder. In many cases the tool engaging geometry is not arranged at an end of the upper part facing away from the valve housing but the upper part protrudes over the tool engaging geometry in a direction away from the valve housing. The hollow cylinder has the advantage that the protruding part of the upper part can be inserted in the hollow cylinder. Furthermore, the hollow cylinder can easily be used to couple the valve seat tool to the upper seat tool.

Preferably the upper part tool is screwed on the actuating means and/or the valve seat tool is screwed in the upper part tool. Such a connection allows a simple replacement of the respective tools.

A preferred embodiment of the invention will now be described in more detail with reference to the drawing, wherein:
- Fig. 1: shows a section through a valve arrangement,
- Fig. 2: shows a detail A of Fig. 1,
- Fig. 3: shows a section through a tool arrangement,
- Fig. 4: shows a detail B of Fig. 3 and
- Fig. 5: shows the tool arrangement from the outside.

A valve arrangement 1 comprises a valve housing 2 having an inlet 3 and an outlet 4. A flow control valve 5 is arranged between the inlet 3 and the outlet 4. The flow control valve 5 has a control valve element 6 and a control valve seat 7. The control valve seat 7 is arranged at a seat element 8.

The control valve element 6 is positioned at a lower end (as shown in the drawing) of a valve spindle 9. The valve spindle 9 is loaded by a spring 10 in an opening direction.

The flow control valve 5 comprises an upper part 11 which can also be referred to as control valve housing. The upper part 11 is threaded into the valve housing 2 of the valve arrangement 1. A pre-adjustment means 12 is arranged within the control valve housing 11 and comprises a wall 13 extending in circumferential direction and surrounding the control valve element 6. The wall 13 has an axial length varying in circumferential direction so that the wall 13 forms a rotary gate. Depending on the angular position of the pre-adjustment means 12 a passage between the flow control valve 5 and the outlet 4 is more or less opened.

The valve arrangement 1 further comprises a pressure regulating valve 15. This pressure regulating valve 15 comprises a regulating valve housing 16 forming a regulating valve seat 17 and a regulating valve element 18 which is shown in an open condition, i.e. an opening between the regulating valve element 18 and the regulating valve seat 17 is at a maximum. The seat element 8 forming the control valve seat 7 is part of the regulating valve housing 16. However, the seat element 8 can be a separate part from the regulating valve housing.

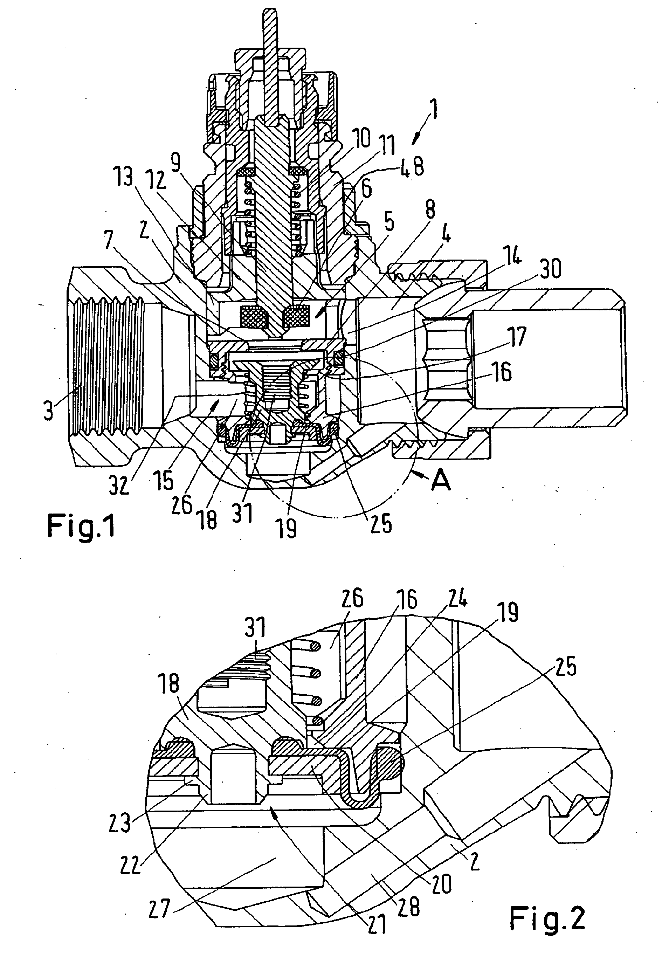

As can be seen in Fig. 2 the regulating valve element 18 is connected to a membrane 19. The membrane 19 is fixed to the regulating valve element 18 with help of a fixing means 20. The fixing means 20 is connected to the regulating valve element 18 with a rivet like connection 21. To this end the regulating valve element 18 has a stud 22 protruding through the fixing means 20 and having a crimped collar 23 holding the fixing means 20 against the regulating valve element 18.

The regulating valve element 18 passes through a bore 24 in the regulating valve housing 16. The diameter of the fixing means 20 is larger than the diameter of the bore 24. Therefore, the regulating valve element 18 can be moved into an opening direction of the pressure regulating valve 15 only to a position in which the membrane 19 is clamped between the fixing means 20 and the regulating valve housing 16. No further movement relative to the regulating valve housing 16 is possible.

The membrane 19 comprises a sealing ring 25 formed integrally with the rest of the membrane 19. This sealing ring 25 forms a seal between the regulating valve housing 16 and the valve housing 2 and separates a first chamber 26 which is connected to the inlet 3 from a second chamber 27 which is connected to the outlet 4 via a channel 28.

The pressure regulating valve 15 and the flow control valve 5 are inserted into the housing 2 via a common opening. In other words the pressure regulating valve 15 and the flow control valve 5 are mounted from the same direction. This has the advantage that only one opening must be sealed to the outside. However, it has the drawback that the pressure regulating valve 5 is difficult to remove once it is mounted in the valve housing 2. The sealing ring 25 of the membrane 19 and a further sealing ring 30 between the regulating valve housing 16 and the valve housing 2 are responsible for holding the pressure regulating valve 15 in the valve housing 2 with a rather high friction.

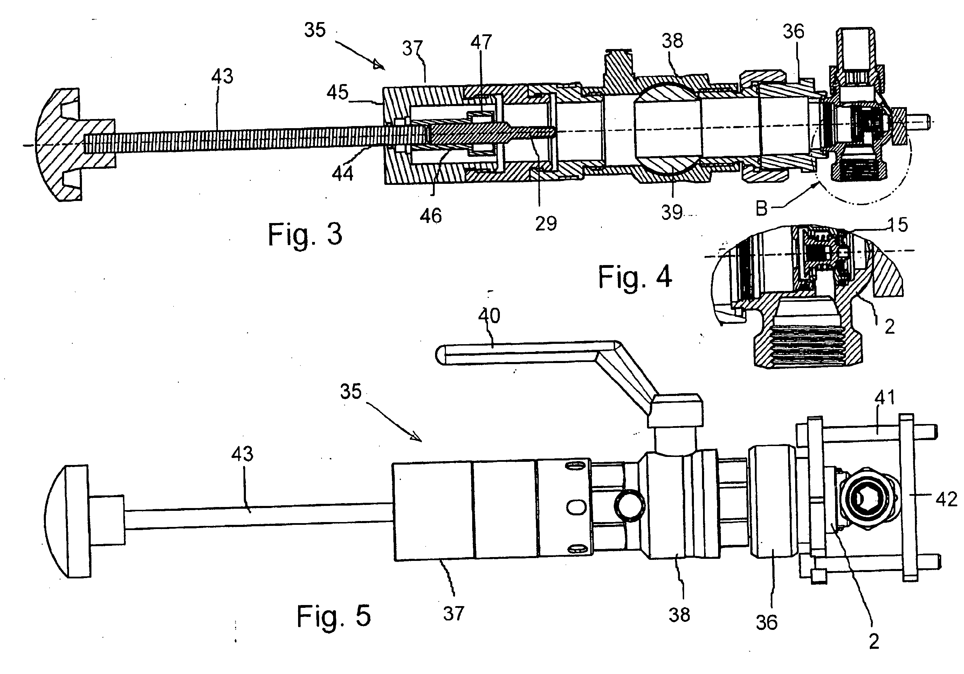

In order to be able to demount the pressure regulating valve 15 from the valve housing the regulating valve element 18 is provided with a tool fixing geometry 31. The tool fixing geometry 31 allows a valve seat tool 29 (Fig. 3) to be fastened to the pressure regulating valve 15. Once the valve seat tool 29 is in engagement with the tool fixing geometry 31 the pressure regulating valve 15 together with the control valve seat 7 can easily be moved out of the valve housing 2 when the valve seat tool 29 is pulled out of the valve housing 2. In this case the tool fixing geometry 31 is indirectly connected to the control valve seat 7.

In the present embodiment the tool fixing geometry 31 has the form of a thread. The valve seat tool 29 can easily be threaded into the regulating valve element 18.

Another possibility is to form the tool fixing geometry as part of a bayonet joint. In this case the valve seat tool is inserted into the regulating valve element 18 and turned by a predetermined angle like a bayonet. Thereafter, it is possible to pull out the pressure regulating valve 15 together with the control valve seat 7.

Although the valve seat tool 29 engages the regulating valve element 18 only the whole pressure regulating valve 15 together with the control valve seat 7 can be removed from the valve housing 2 since the fixing element 20 transmits the drawing force to the regulating valve housing 16. Since the seat element 8 is part of the regulating valve housing 16 the control valve seat 7 is removed together with the regulating valve housing 16 out of the valve housing 2.

The seat element 8 is secured to the regulating valve housing 16. In the present example this connection is made as threaded connection, i.e. the seat element 8 is threaded onto the regulating valve housing 16. It is also possible to use a crimp connection between the seat element 8 and the regulating valve housing 16.

Other functions of the valve arrangement 1 are known per se. The pressure regulating valve 15 adjusts an opening between the regulating valve element 18 and the regulating valve seat 17 so that a pressure drop over the flow control valve 5 is kept constant. To this end the regulating valve element 18 is loaded by a spring 32 in an opening direction. The pressure at the inlet 3 acts on the regulating valve element 18 in opening direction and the pressure in the outlet 4 acts on the regulating valve element 18 in closing direction.

The pressure regulating valve 15 is held in place in the valve housing 2 by means of the wall 13 of the pre-adjustment means 12. Once the flow control valve 5 is mounted there is no possibility for the pressure regulating valve 15 and the control valve seat 7 to move within the valve housing 2.

Figs. 3 to 5 show a tool arrangement 35 for removing the control valve seat 7 from the valve housing 2 and for inserting another control valve seat 7. As described above this operation is performed by exchanging the pressure regulating valve 15.

The tool arrangement 35 comprises a tool housing, said tool housing having a connection part 36, a tool guiding part 37 and a stop valve part 38. The stop valve part 38 is arranged between the connection part 36 and the tool guiding part 37. The stop valve part 38 comprises a ball 39 which can be rotated by means of a lever 40. In the position shown in Fig. 3 the stop valve part 38 is fully open. By rotating the ball 39 by 90° the stop valve part 38 can be completely closed.

The connection part 36 is screwed on the valve housing 2. Additional fixation means 41, 42 are used to make the connection between the tool arrangement 35 and the valve housing 2 more stable. The connection between the connection part 36 and the valve housing 2 is fluid tight. When the ball 39 of the stop valve part 38 is moved into an open position (as illustrated in Fig. 3) there is a fluid connection from the valve housing 2 to the complete interior of the tool arrangement 35.

A spindle 43 is guided in the tool guiding part 37. The spindle 43 is inserted in an opening 44 in a front face 45 of the tool arrangement 35. The opening 44 is sealed. The spindle 43 can be rotated around an axis (dashed line) and moved in axial direction. The spindle 43 forms an actuating means.

The part of the spindle 43 inside the tool guiding part 37 carries an upper part tool 46. This upper part tool 46 is screwed to the spindle 43 or connected to the spindle 43 in another suitable manner.

The upper part tool 46 is formed as a hollow cylinder having a portion 47 of a greater diameter. This portion 47 can be connected to the upper part 11 of the flow control valve 5 in a torque transmitting manner. A corresponding tool engaging geometry 48, e.g. a spline geometry, is schematically indicated in Fig. 1.

The upper part tool 46 has connection geometries, one in the portion 47 of greater diameter and one in the remaining portion. The valve seat tool 29 can be screwed into the remaining portion having a smaller diameter than the portion 47 of greater diameter.

In Fig. 3 a situation is illustrated in which the upper part 11 has already been removed from the valve housing 2. The valve seat tool 29 is screwed to the spindle 43. The stop valve portion 38 is opened. In this condition the spindle 43 is pushed toward the valve housing 2. The valve seat tool 29 is screwed into the tool fixing geometry 31. When the spindle 43 is pulled in a direction away from the valve housing 2 the complete pressure regulating valve 15 including the control valve seat 7 is removed from the valve housing 2.

When the pressure regulating valve 15 has passed the stop valve section 38 the ball 39 is rotated by 90° in order to close the stop valve part 38. Thereafter, the tool guiding portion 37 can be removed from the tool arrangement 35 and the pressure regulating valve 15 together with the control valve seat 7 can be removed from the valve seat tool 29. Thereafter, a new pressure regulating valve 15 having a new control valve seat 7 can be screwed onto the valve seat tool 29. The tool guiding part 37 is again connected to the remaining parts of the tool arrangement 35. When a fluid tight connection between the tool guide part 37 and the stop valve part 38 has been established the ball 39 is again rotated by 90° in order to open the stop valve part 38. When the ball 39 is in the open position (Fig. 3) the new pressure regulating valve 15 can be inserted into the valve housing 2.

Thereafter, the spindle 43 is decoupled from the pressure regulating valve 15 and pulled in a direction away from the valve housing 2. When the valve seat tool 29 has passed the stop valve part 38 the ball 39 is rotated by 90° in order to close the stop valve part 38. The tool guiding part 37 is again demounted. The valve seat tool 29 is screwed out of the upper part tool 46. The upper part 11 is inserted into the upper part tool 46, more precisely in the section 47 having the enlarged diameter. The tool guiding part 37 is again fastened to the remainder of the tool arrangement 35 in a fluid tight manner. The stop valve part 38 is opened. The spindle 43 is pushed towards the valve housing and is used to screw the upper part 11 into the valve housing 2.

When the valve arrangement 1 has been reconstructed in the manner described the tool arrangement 35 can be removed from the valve housing. The loss of heating or cooling fluid is reduced to a minimum.

When the control valve seat 7 has to be replaced again, the tool arrangement 35 is used first to remove the upper part 11 of the valve arrangement 1 and then the pressure regulating valve 15.

When the control valve seat 7 is not part of the regulating valve housing 16 the valve seat tool 29 has to be modified. The modified form of the valve seat tool depends on the form of the seat element 8.

As shown in Fig. 1 the valve seat 7 has an edge facing the valve element 6. This edge comprises a curvature. A plurality of valve seats 7 is provided, wherein at least two of these valve seats 7 have different curvatures. The change of the curvature is in many cases sufficient to reduce a noise produced during the operation of the valve arrangement 1.

An additional possibility is that the material of the seat element 8 is different from other valve seats of the plurality of valve seats. This is a further possibility to change the vibrational behaviour of elements of the valve arrangement 1 which are usually cause of noise.

## Claims

1. A valve arrangement for controlling a heating or cooling fluid comprising: a valve housing (2) having an inlet (3) and an outlet (4), a flow control valve (5) arranged between the inlet (3) and the outlet (4), said flow control valve (5) comprising a valve seat (7) and a valve element (6), wherein the valve seat (7) is mounted detachably in the valve housing (2), **characterized in that** the valve element (6) is supported in an upper part (11) of the valve, and wherein the valve seat (7) is connected to a tool fixing geometry (31) allowing a valve seat tool (29) to be fastened and remove said valve seat (7) and wherein the upper part (11) is provided with a tool engaging geometry (48) adapted to an upper part tool and the tool engaging geometry (48) and the tool fixing geometry (31) having a common axis, such that a common tool arrangement can be used for demounting the upper part (11) and the valve seat (7).

2. The valve arrangement according to claim 1, **characterised in that** the valve seat (7) is fixed in the valve housing by means of said upper part (11).

3. The valve arrangement according to claim 1 or 2, **characterised in that** a plurality of different valve seats (7) is provided and a valve seat mounted in said valve housing (2) is replaceable by another valve seat (7) of said plurality of valve seats.

4. The valve arrangement according to claim 3, **characterised in that** at least two valve seats (7) of said plurality of valve seats differ in a curvature of an edge surrounding a through-opening through said valve seat.

5. The valve arrangement according to claim 3 or 4, **characterised in that** at least two valve seats of said plurality of valve seats differ in material.

6. The valve arrangement according to any of claims 1 to 5, **characterised in that** a pressure regulating valve (15) is mounted detachably in the valve housing (2) upstream the valve seat (7) and the fixing geometry (31) is part of the pressure regulating valve (15).

7. The valve arrangement according to claim 6, **characterised in that** the valve seat (7) is part of the pressure regulating valve (15).

8. A tool arrangement for replacing at least a part of a valve arrangement (1) according to any of claims 1 to 7, said tool arrangement (35) having a tool (36) for mounting said tool housing to said valve housing (2), a tool guiding part (37) and a stop valve part (38) arranged between said connection part (36) and said tool guiding part (37), said tool guiding part (37) guiding an actuating means (43), said actuating means (43) carrying a valve seat tool (29), wherein said valve seat tool (29) is adapted to said tool fixing geometry (31).

9. The tool arrangement according to claim 8, **characterised in that** an upper part tool (46) is mounted to said actuating means (43), said upper part tool (46) is adapted to said tool engaging geometry (48).

10. The tool arrangement according to claim 9, **characterised in that** said valve seat tool (29) is mounted to said upper part tool (46).

11. The tool arrangement according to claim 9 or 10, **characterised in that** said upper part tool (46) forms a hollow cylinder and the valve seat tool (29) is insertable into said hollow cylinder.

12. The tool arrangement according to any of claims 9 to 11, **characterised in that** the upper part tool (46) is screwed on the actuating means (43) and/or the valve seat tool (29) is screwed in the upper part tool (46).

## Patentansprüche

1. Ventilanordnung zur Regelung eines Heiz- oder Kühlfluids, umfassend: ein Ventilgehäuse (2) mit einem Einlass (3) und einem Auslass (4), ein zwischen dem Einlass (3) und dem Auslass (4) angeordnetes Stromregelventil (5), wobei das Stromregelventil (5) einen Ventilsitz (7) und ein Ventilelement (6) umfasst, wobei der Ventilsitz (7) lösbar im Ventilgehäuse (2) angebracht ist, **dadurch gekennzeichnet, dass** das Ventilelement (6) in einem Oberteil (11) des Ventils gestützt wird, und wobei der Ventilsitz (7) mit einer Werkzeugbefestigungsgeometrie (31) verbunden ist, die gestattet, dass ein Ventilsitzwerkzeug (29) angebracht wird und den Ventilsitz (7) entfernt, und wobei der Oberteil (11) mit einer Werkzeugeingriffsgeometrie (48) versehen ist, die an ein Oberteilwerkzeug angepasst ist, und die Werkzeugeingriffsgeometrie (48) und die Werkzeugbefestigungsgeometrie (31) eine gemeinsame Achse aufweisen, so dass eine gemeinsame Werkzeuganordnung zum Abmontieren des Oberteils (11) und des Ventilsitzes (7) verwendet werden kann.

2. Ventilanordnung nach Anspruch 1, **dadurch gekennzeichnet, dass** der Ventilsitz (7) mittels des Oberteils (11) im Ventilgehäuse befestigt ist.

3. Ventilanordnung nach Anspruch 1 oder 2, **dadurch gekennzeichnet, dass** mehrere verschiedene Ventilsitze (7) vorgesehen sind und ein im Ventilgehäuse (2) angebrachter Ventilsitz durch einen anderen Ventilsitz (7) der mehreren Ventilsitze ersetzt werden kann.

4. Ventilanordnung nach Anspruch 3, **dadurch gekennzeichnet, dass** mindestens zwei Ventilsitze (7) der mehreren Ventilsitze eine unterschiedliche Krümmung eines eine Durchgangsöffnung durch den Ventilsitz umgebenden Rands besitzen.

5. Ventilanordnung nach Anspruch 3 oder 4, **dadurch gekennzeichnet, dass** sich mindestens zwei Ventilsitze der mehreren Ventilsitze hinsichtlich ihres Materials unterscheiden.

6. Ventilanordnung nach einem der Ansprüche 1 bis 5, **dadurch gekennzeichnet, dass** ein Druckregelventil (15) stromaufwärts des Ventilsitzes (7) lösbar im Ventilgehäuse (2) angebracht ist und die Befestigungsgeometrie (31) Teil des Druckregelventils (15) ist.

7. Ventilanordnung nach Anspruch 6, **dadurch gekennzeichnet, dass** der Ventilsitz (7) Teil des Druckregelventils (15) ist.

8. Werkzeuganordnung zum Auswechseln von mindestens einem Teil einer Ventilanordnung (1) nach einem der Ansprüche 1 bis 7, wobei die Werkzeuganordnung (35) ein Werkzeug (36) zum Anbringen des Werkzeuggehäuses an dem Ventilgehäuse (2), ein Werkzeugführungsteil (37) und ein Absperrventilteil (38), das zwischen dem Verbindungsteil (36) und dem Werkzeugführungsteil (37) angeordnet ist, aufweist, wobei das Werkzeugführungsteil (37) ein Betätigungsmittel (43) führt, wobei das Betätigungsmittel (43) ein Ventilsitzwerkzeug (29) trägt, wobei das Ventilsitzwerkzeug (29) an die Werkzeugbefestigungsgeometrie (31) angepasst ist.

9. Werkzeuganordnung nach Anspruch 8, **dadurch gekennzeichnet, dass** ein Oberteilwerkzeug (46) an dem Betätigungsmittel (43) angebracht ist, wobei das Oberteilwerkzeug (46) an die Werkzeugeingriffsgeometrie (48) angepasst ist.

10. Werkzeuganordnung nach Anspruch 9, **dadurch gekennzeichnet, dass** das Ventilsitzwerkzeug (29) an dem Oberteilwerkzeug (46) angebracht ist.

11. Werkzeuganordnung nach Anspruch 9 oder 10, **dadurch gekennzeichnet, dass** das Oberteilwerkzeug (46) einen Hohlzylinder bildet und das Ventilsitzwerkzeug (29) in den Hohlzylinder eingeführt werden kann.

12. Werkzeuganordnung nach einem der Ansprüche 9 bis 11, **dadurch gekennzeichnet, dass** das Oberteilwerkzeug (46) auf das Betätigungsmittel (43) geschraubt ist und/oder das Ventilsitzwerkzeug (29) in das Oberteilwerkzeug (46) geschraubt ist.

## Revendications

1. Agencement de soupape pour contrôler un fluide de chauffage ou de refroidissement, comprenant : un boîtier de soupape (2) ayant une entrée (3) et une sortie (4), une soupape de régulation de l'écoulement (5) disposée entre l'entrée (3) et la sortie (4), ladite soupape de régulation de l'écoulement (5) comprenant un siège de soupape (7) et un élément de soupape (6), le siège de soupape (7) étant monté de manière détachable dans le boîtier de soupape (2), **caractérisé en ce que** l'élément de soupape (6) est supporté dans une partie supérieure (11) de la soupape, et le siège de soupape (7) étant connecté à une géométrie de fixation d'outil (31) permettant à un outil de siège de soupape (29) d'être attaché et d'enlever ledit siège de soupape (7) et la partie supérieure (11) étant pourvue d'une géométrie d'engagement d'outil (48) adaptée à un outil de partie supérieure et la géométrie d'engagement d'outil (48) et la géométrie de fixation d'outil (31) ayant un axe commun, de telle sorte qu'un agencement d'outil commun puisse être utilisé pour démonter la partie supérieure (11) et le siège de soupape (7).

2. Agencement de soupape selon la revendication 1, **caractérisé en ce que** le siège de soupape (7) est fixé dans le boîtier de soupape au moyen de ladite partie supérieure (11).

3. Agencement de soupape selon la revendication 1 ou 2, **caractérisé en ce qu'**une pluralité de sièges de soupape différents (7) est prévue et un siège de soupape monté dans ledit boîtier de soupape (2) est remplaçable par un autre siège de soupape (7) de ladite pluralité de sièges de soupape.

4. Agencement de soupape selon la revendication 3, **caractérisé en ce qu'**au moins deux sièges de soupape (7) de ladite pluralité de sièges de soupape diffèrent de par une courbure d'un bord entourant une ouverture traversante à travers ledit siège de soupape.

5. Agencement de soupape selon la revendication 3 ou 4, **caractérisé en ce qu'**au moins deux sièges de soupape de ladite pluralité de sièges de soupape diffèrent de par leur matériau.

6. Agencement de soupape selon l'une quelconque des revendications 1 à 5, **caractérisé en ce qu'**une soupape de régulation de la pression (15) est montée de manière détachable dans le boîtier de soupape (2) en amont du siège de soupape (7) et la géométrie de fixation (31) fait partie de la soupape de régulation de la pression (15).

7. Agencement de soupape selon la revendication 6, **caractérisé en ce que** le siège de soupape (7) fait partie de la soupape de régulation de la pression (15).

8. Agencement d'outil pour remplacer au moins une partie d'un agencement de soupape (1) selon l'une quelconque des revendications 1 à 7, ledit agencement d'outil (35) ayant un outil (36) pour monter ledit boîtier d'outil sur ledit boîtier de soupape (2), une partie de guidage d'outil (37) et une partie de soupape d'arrêt (38) agencée entre ladite partie de connexion (36) et ladite partie de guidage d'outil (37), ladite partie de guidage d'outil (37) guidant un moyen d'actionnement (43), ledit moyen d'actionnement (43) portant un outil de siège de soupape (29), ledit outil de siège de soupape (29) étant adapté à ladite géométrie de fixation d'outil (31).

9. Agencement d'outil selon la revendication 8, **caractérisé en ce qu'**un outil de partie supérieure (46) est monté sur ledit moyen d'actionnement (43), ledit outil de partie supérieure (46) étant adapté à ladite géométrie d'engagement d'outil (48).

10. Agencement d'outil selon la revendication 9, **caractérisé en ce que** ledit outil de siège de soupape (29) est monté sur ledit outil de partie supérieure (46).

11. Agencement d'outil selon la revendication 9 ou 10, **caractérisé en ce que** ledit outil de partie supérieure (46) forme un cylindre creux et l'outil de siège de soupape (29) peut être inséré dans ledit cylindre creux.

12. Agencement d'outil selon l'une quelconque des revendications 9 à 11, **caractérisé en ce que** l'outil de partie supérieure (46) est vissé sur le moyen d'actionnement (43) et/ou l'outil de siège de soupape (29) est vissé dans l'outil de partie supérieure (46).
